Europäisches Patentamt

European Patent Office

Office européen des brevets

(19)

(11) Publication number: **0 062 443**
**A1**

# (12) EUROPEAN PATENT APPLICATION

(21) Application number: **82301495.6**

(22) Date of filing: **23.03.82**

(51) Int. Cl.³: **G 01 N 21/78**

(30) Priority: **30.03.81 GB 8109918**

(43) Date of publication of application: **13.10.82**
**Bulletin 82/41**

(84) Designated Contracting States: **BE DE FR GB NL**

(71) Applicant: **IMPERIAL CHEMICAL INDUSTRIES PLC, Imperial Chemical House Millbank, London SW1P 3JF (GB)**

(72) Inventor: **Cramp, John Harry William, St Cloud 37 Eccleston Gardens, St Helens Walo 3BL (GB)**
Inventor: **Reid, Robert Ferguson, 10 Hawkshead Close Beechwood, Runcorn Cheshire (GB)**

(74) Representative: **Hall, David Brian et al, Imperial Chemical Industries PLC Legal Department: Patents Thames House North Millbank, London SW1P 4QG (GB)**

(54) **Sensitive optical fibres.**

(57) A method for monitoring changes in a physical or chemical parameter, comprises constructing an optical fibre (35) having a colour-sensitive portion (37) comprising a core which is free from cladding or whose cladding is sufficiently thin or porous for a coloured fluid to be capable of absorbing light which may be passed through the sensitive portions (37) when the latter is immersed in the coloured fluid, immersing at least a part of the sensitive portion in a colourant-containing fluid, applying the parameter so as to vary the spectrum or amount of colour adjacent to the sensitive portion (37) of the fibre (35) with changes in the parameter, passing through the sensitive portion light having a wavelength or waveband which is absorbed at least in part by the colourant in amount which varies with the changes in parameter, and monitoring the absorption of the light which passes through the sensitive portion. The amount of colour in the fluid adjacent to the fibre can be varied by varying the intensity of the colour in the fluid, or the length of the sensitive fibre which is immersed in a coloured liquid. Variation in the spectrum can be monitored as variations in the wavelength of a peak absorption or as intensity variations at a predetermined wavelength.

## SENSITIVE OPTICAL FIBRE

The invention relates to the field of fibre optics and provides a method for remote monitoring of chemical or physical parameters using a sensitive optical fibre in an environment to which it is sensitive, and applying the parameters to modify the environment.

Optical fibres consist essentially of a transparent core surrounded by a cladding of lower refractive index in intimate contact with the core. Light fed into the core is transmitted along the fibre through the core, being internally reflected at the core/cladding interface. It is believed that light striking the interface penetrates the cladding for a very small distance, of the order of one wavelength, before being returned to the core. This penetrating light is known generally as an "evanescent wave".

We have found that where the cladding is removed from the core it becomes colour-sensitive in that any coloured fluid surrounding and in contact with the core will cause attenuation of light of appropriate wavelengths passed through the core, presumably through penetration of the coloured fluid by the evanescent wave. This can also occur where the cladding is extremely thin or sufficiently porous to allow contact between the coloured fluid and the core, although the effect becomes progressively less noticeable as the cladding increases in thickness or becomes less porous. We have now put this discovery to good use and have developed a method by which a wide range of parameters can be remotely monitored using this physical property.

Accordingly we provide a method for monitoring changes in a physical or chemical parameter, which comprises constructing an optical fibre having a colour-sensitive portion comprising a core which is free from cladding or whose cladding is sufficiently thin or porous for a coloured fluid to be capable of absorbing light which may be passed through the sensitive portion when the latter is immersed in the coloured fluid, immersing at least a part of the sensitive portion in a colourant-containing fluid, applying the parameter so as to vary the spectrum or amount of colour adjacent to the sensitive portion of the fibre with changes in the parameter, passing through the sensitive portion light having a wavelength or waveband which is absorbed at least in part by the colourant in amount which varies with the changes in parameter, and monitoring the absorption or changes in the absorption of the light which passes through the sensitive portion.

The method is suitable for use with light at a wide range of wavelengths, including light in the ultraviolet, visible and infra-red regions. The wavelengths selected depending largely on the colourant used, and on the wavelengths at which chemical or physical parameters under observation may affect the absorption spectrum of the fluid. As will be appreciated, for most wavelengths extending through the visible region and well into the infra-red, the depth of penetration of the evanescent waves into whatever surrounds the core, will be very small. As a practical consequence, the provision of cladding sufficiently thin for the evanescent waves of most wavelengths to penetrate right through to a surrounding fluid is difficult to achieve. Accordingly we prefer to use an optical fibre having an unclad sensitive portion.

Where possible we prefer to use a liquid as the colourant-containing fluid, because except when used at very high pressures with long sensitive portions of fibre, we find that the absorption by gases tends to be very low, and the sensitivity of the apparatus then becomes low as a consequence.

The colourant may be a dye or mixture of dyes which vary their peak absorption wavelength with changes in pH. Similarly, transition metals tend to have different coloured ions for different oxidation states, and hence when changing from one state to another the absorption peak of their solution will change. A convenient way of using the present method in monitoring these and other parameters which cause a shift in absorption peak is one which comprises repeatedly analysing the spectrum of the light which has passed through the sensitive portion of the fibre thereby to determine the wavelength of a predetermined absorption peak, and identifying variations in the wavelength at which the absorption peak occurs as an indication of changes in the parameter.

An alternative way of using the present method is to monitor variations in the absorption at a predetermined wavelength, e.g. the wavelength of one oxidation state absorption peak, variations in the absorption at this predetermined wavelength providing a measure of changes in the oxidation state or other parameter being measured. This way of using the present method is also applicable to the monitoring of parameters which are applied to the fluid in such a way as to vary the amount of colour adjacent to the sensitive fibre, and examples of these are given hereinafter.

4

Single wavelength measurements are often imprecise, but can be satisfactory where mere detection of an abrupt change is all that is required. For more sensitive quantitative work, a difficulty which can arise when measuring only at a single predetermined wavelength, is that variations in the intensity due to other reasons, such as changes in output of whatever light source is used or a build up of dirt films on optical surfaces within the apparatus used, for example, cannot readily be isolated from intensity variations due to changes in the parameter. A preferred way of carrying out measurements at predetermined wavelengths, which largely overcomes these problems is one which comprises measuring the intensity of the light which has passed through the sensitive portion of the fibre, at a wavelength at which light is absorbed by the colourant and at a wavelength at which there is substantially no absorption, and determining the ratio of the intensities as a measure of the absorption due to the parameter-variable colour.

The amount of colour in the fluid adjacent to the fibre can be varied in at least two ways. Thus the parameter may be applied to the fluid so as to vary the intensity of the colour in the fluid. An alternative which is particularly useful when using a coloured liquid as the fluid, is one in which the parameter is applied to the liquid or to the fibre so as to vary the length of the sensitive fibre which is immersed in the liquid. When considering the colour which is adjacent to the fibre, in theory it is a layer having a thickness equal to the penetration of the evanescent wave which should be considered, but in practice the thickness does not seem to matter provided that layers of equal thickness are considered when making quantitative comparisons. We prefer to apply the parameters so as to vary the amount of colour either by varying its intensity or by varying the length of sensitive fibre immersed, rather than allow both to occur together. Thus for example, when measuring concentration as the variable parameter of a solution of coloured ions, using a partially immersed sensitive portion of fibre, if an equal volume of solvent be added, the effect of doubling the length of immersed fibre would be offset by the effect of halving the number of coloured ions adjacent each unit length of fibre.

In the above example, the parameter itself provided its own colourant in the form of coloured ions. Similarly the absorption spectrum of hydronium ions enables pH to be measured directly using light in the near infra-red, and in this way provides its own colourant with respect to the wavelength used. However, the approach can also be indirect. For example when pH is again the parameter to be measured, e.g. during a titration, the colourant may be a mixture of pH-sensitive dyes whose peak absorption wavelength varies with changes in pH as the titration proceeds.

The sensitive fibre can be moveable into and out from a static reservoir of coloured liquid, with a bias in one direction so as to oppose a force applied by the parameter, e.g. weight. However a preferred way of carrying out the method comprises locating the sensitive portion of the fibre along the inside of a hollow tube, connecting the tube to a reservoir containing the coloured liquid so that the liquid extends into the tube and thereby partly immerses the sensitive portion, and applying the parameter to the reservoir or extension thereof so as to vary the amount of the coloured liquid extending into the tube with changes in the parameter. Physical parameters which can be monitored in this way include volume (e.g. where the volume of liquid in the reservoir determines the level of its surface and correspondingly the level in the tube), pressure (e.g. where the pressure is applied to a flexible wall of the reservoir to vary the level of liquid in it,

6

or to vary the volume of a closed reservoir, and thereby to vary the level of liquid in the tube) and temperature (e.g. where the reservoir is a sealed container, and where changes in the temperature of the container and its contents causes a variation in the level of the liquid in the attached tube), for example. In the latter case of temperature monitoring, it can be useful to extend the reservoir to a gas filled bulb whose expansion or contraction with changes in temperature can cause even greater changes in the amount of coloured liquid pushed out of the reservoir into the tube.

The sensitive portion of optical fibre is connected to a light source and light detector by transmissive optical fibre, such as the conventional fibres having a transparent core and lower refractive index cladding referred to in the introduction hereinabove. Typical core diameters currently used in transmissive fibres are 200 μm, 100 μm and 60 μm, giving a thin flexible fibre. Hence where the sensitive portion is formed as an intermediate portion in a conventional optical fibre, the colour sensing is carried out in the present method using a very thin and unobtrusive device, which can be connected to a remote light source and detector through its flexible transmissive portions. Moreover, like other optical fibres, it avoids hazards, such as sparking or signal interference, associated with electrical sensors.

A fibre configuration which is particularly convenient in many applications, is a probe having a reflective colour-sensitive end, and a remote end connectable to both source and detector so that light fed into the remote end is transmitted to the sensitive end, and at least a portion is reflected back to the remote end for collection by the detector. This can be achieved in two particularly effective ways. In the first of these the core of the sensitive portion is made reflective at one end and from the other end extends a transmissive portion for conveying light both to and from the sensitive portion fibre, e.g. as a single optical fibre. This enables a particularly thin probe to be constructed, i.e. having the thickness of the single optical fibre.

The sensitivity of this configuration is enhanced in that the light interrogates the surrounding coloured fluid twice, i.e. both before and after reflection. However, as both the light source and detector need to interface the single transmissive fibre leaving the sensitive portion, some form of beam splitter (e.g. a Y junction or half silvered mirror) will be required, and a substantial proportion of the signal may be lost there, dependent on the form of beam splitter employed. The beam splitter is conveniently positioned adjacent to the source and detector, i.e. remote from the sensitive fibre, but less noise can sometimes be introduced by locating it adjacent to the sensitive portion i.e. remote from the light source. The reflective end can be a scattering surface, but as this generally results in loss of signal we prefer to flatten and polish the end to give substantially specular reflection in order to retain as much of the light as possible.

The second form of probe is an apparatus wherein the sensitive portion has two ends each of which leads into a different transmissive portion, the sensitive portion being in the form of two lengths lying adjacent to each other and joined by a reflective coupling means whereby light launched from a source into the remote end of one transmissive portion, travels through that portion, through one length of the sensitive portion to be reflected into the other length and thence along the other transmissive portion for detection at the latter's remote end. This design does not require a beam splitter to separate ingoing and outgoing beams, and can still be formed as a very thin

8

probe having a size substantially that of two optical fibres in one thickness direction and only a single fibre in the perpendicular direction.

Because of their small dimensions the probes can be inserted into liquid streams in quite narrow pipework without substantially affecting the fluid flow, or they can be inserted through catheters into living organisms for remote real time monitoring of, for example, blood oxygen content.

We prefer the core of the sensitive portion to be integral with the core of the transmissive portions. There will then automatically be no difference in core diameter between transmissive and sensitive portions, and the possibility of any misalignment occurring when butt joining the ends of different cores is clearly avoided. This is most readily achieved in probe configurations of either of the above types, e.g. simply by removing a length of cladding from one end of a transmissive fibre, and providing it with a reflective surface. However to provide an intermediate portion with an integral core can present more difficulty, and is generally easier to take a separately made core as the sensitive intermediate portion, and to join this at either end to conventional transmissive portions using standard connectors or by fusion splicing.

The invention is illustrated by reference to specific embodiments thereof shown in the accompnaying drawings, in which:

Figure 1 is a section through an apparatus for detecting colour changes in a flowing liquid,

Figure 2 is a section through an apparatus for sampling liquids,

Figure 3-5 are graphs obtained from experimental results,

Figure 6 is a section through an apparatus for simulating the application of a parameter so as to vary the length of fibre immersed, and

Figure 7 is a graph obtained from experiments performed using the apparatus of Figure 6.

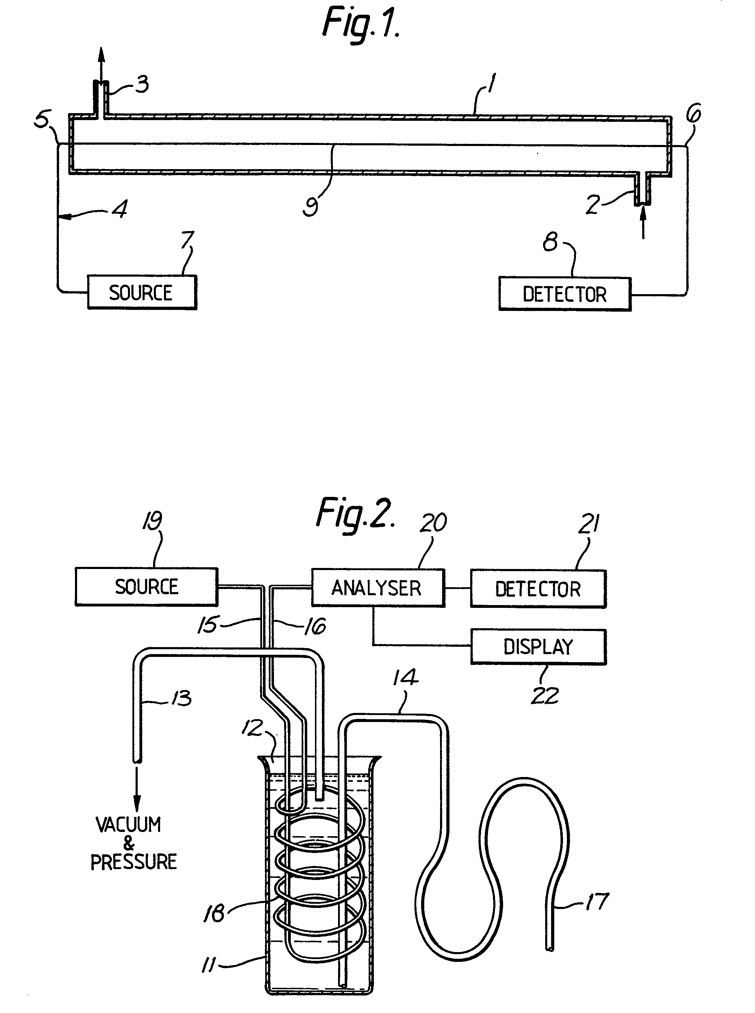

In Figure 1 the apparatus comprises a tubular container 1 having an inlet port 2 and an outlet port 3. Sealed into the container is an optical fibre 4, the two end portions 5, 6 or which have a layer of cladding on their outer surfaces, and are connected to a light source 7 and detector 8, respectively. Welded to the two clad end portions, and located entirely within the tubular container, is a sensitive intermediate portion 9 which is devoid of any cladding.

In use, a fluid flows through the container from the inlet port to the outlet port keeping the container full so that the unclad intermediate portion of the fibre remains continuously immersed in the fluid. The fluid contains a colourant which absorbs light at a specific wavelength and light at that wavelength is fed to the fibre by the source. The detector is a simple device which detects the total amount of light it receives. This will vary according to the amount absorbed as it passes through the intermediate portion, and hence according to the amount of the absorbing component in the fluid.

The apparatus of Figure 2 comprises a container 11 closed by a lid 12 through which pass a vacuum/pressure supply pipe 13, a sample pipe 14 and two clad ends 15, 16 of an optic fibre. The sample pipe is flexible and ends in a nozzle 17. Within the container is an intermediate portion 18 of the optical fibre, which is formed into a loose coil and joined to the end portions by standard connectors. Unlike the end portions the intermediate portion has no cladding around its core.

One end of the optical fibre is connected to a broad band light source 19, and the other end is connected to an analyser 20, which in turn is connected to a detector 21. The purpose of the analyser is to split up the broad waveband of the light, scan the spectrum and send on to the detector only a narrow band at a time. In the embodiment of Figure 2, a rotatable diffraction grating is used as the analyser, but other devices such as graduated filter discs could be used as alternatives. The analyser 20 and the detector 21 are both connected to a display 22, which correlates the detected intensity with the wavelength of the light detected.

In use the nozzle 17 is dipped into the liquid to be tested, and the vacuum applied via the pipe 13, to suck the liquid into the container. This is continued until the coil of the unclad intermediate portion is fully immersed in the liquid. Light is passed through the fibre as before, but in this embodiment it is then analysed, detected and displayed, with the display showing the absorption at different wavelengths. At the conclusion of the measurement the container may be emptied by applying pressure to the pipe 13.

As alternatives to the apparatus shown in the drawings, the flow-through container of Figure 1 may be provided with a broad band source, analyser, detector and display as shown in Figure 2, or the simplified optical system shown in Figure 1 may also be used with the Figure 2 container.

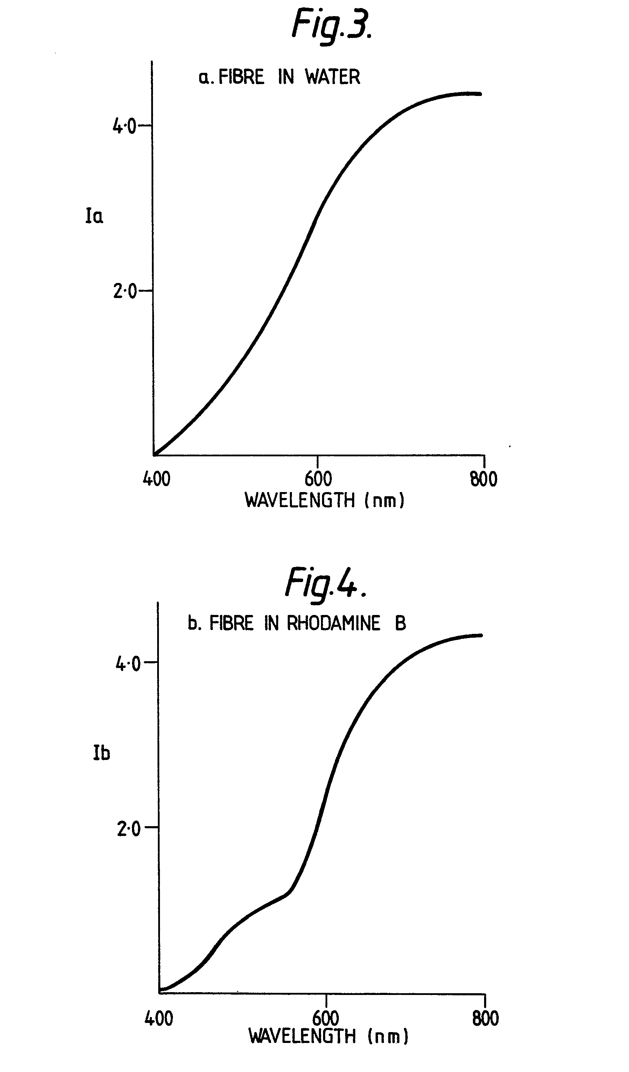

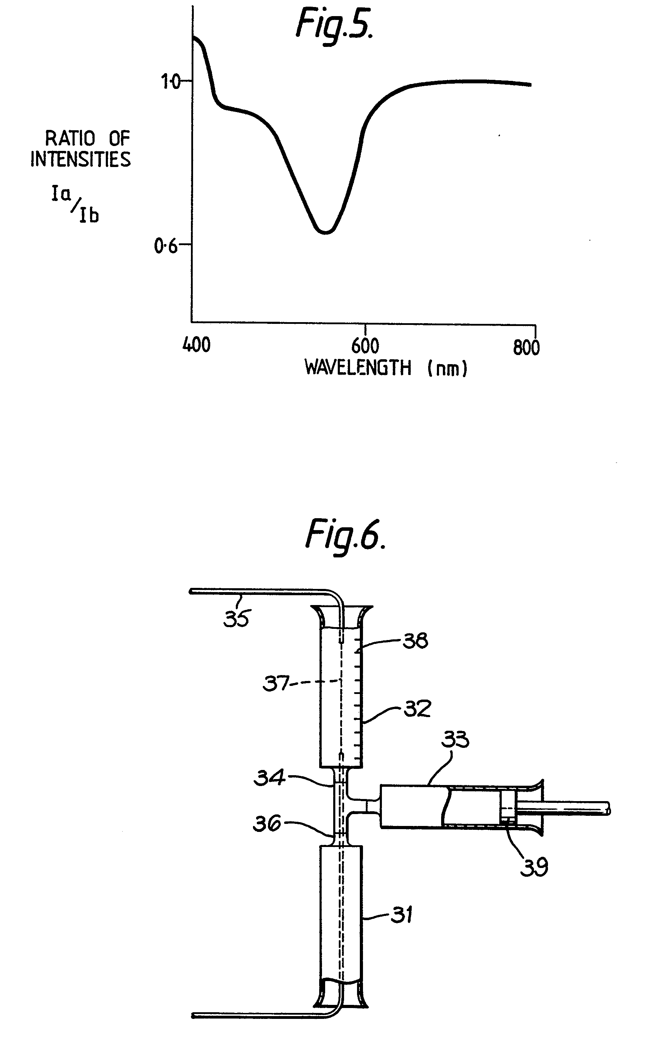

Figure 3 to 5 show results obtained with an apparatus similar to that shown in Figure 2 except that the container was filled directly without the aid of the pipes 13 and 14. An unclad quartz optical fibre was placed first in water and then in an aqueous solution of Rhodamine B, a magenta dye. Light covering the wavelengths of 400 to 800 nm was passed through the fibre, analysed and the detected intensity plotted against wavelength. Figure 3 shows the results using water, the shape of the curve showing the characteristics of the light source and detector used. Figure 4 shows the results obtained using Rhodamine B solution, and in Figure 5 the ratio of the two results is plotted to eliminate the characteristics of the apparatus, and to show the absorption due to the Rhodamine B alone.

The apparatus shown in Figure 6 was constructed from three graduated hyperdermic syringe barrels 31, 32, 33 joined by a T-piece 34 attached to their respective nozzles. An optical fibre 35 was threaded through the two in-line syringes 31, 32 and T piece, and sealed into the nozzle 36 of the lower barrel. The fibre had an intermediate portion 37 which was free from any cladding so as to make it colour sensitive, the sensitive portion extending for the length of the graduations 38 on the upper syringe barrel. The syringe 33 attached to the side arm was complete with its piston 39, and was in fluid communication with the upper barrel 32 via the T-piece. However, the lower syringe was isolated by the seal around the fibre, and was merely used to support the apparatus.

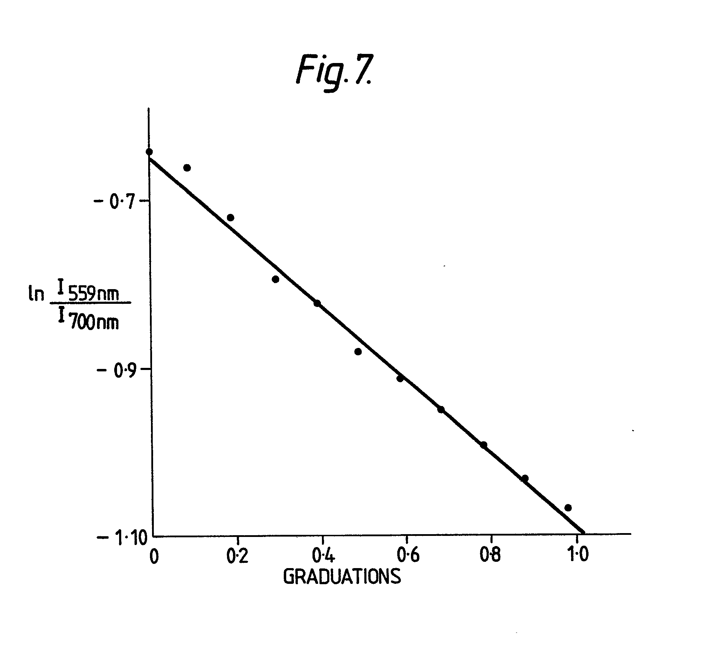

The apparatus was used to test the effect of varying the immersed length of a sensitive fibre in a coloured liquid. The two ends of the optical fibre were connected respectively to a broadband light source and a detector having a spectrum analyser, essentially as shown in Figure 2. The upper barrel was filled with Rhodamine B dye in butanol, so that by operating the piston in the side arm barrel the volume of the magenta liquid in the upper barrel could be varied so as to immerse the sensitive fibre up to the level of each graduation in turn. The spectrum was analysed for each liquid level in turn, but only two wavelengths were in fact used to obtain the results shown in Figure 7. The absorption by the Rhodamine B solution peaked at a wavelength of 559 nm, and at 700 nm the absorption was very little. The intensities at these two wavelengths were then determined, and the log of their ratios was plotted against the height of the solution as read on the graduations. The resulting graph is shown in Figure 7.

Although the apparatus shown in Figure 6 was an experimental rig designed to investigate the practical effect of varying immersion, it can clearly be readily adapted to monitor various parameters where these can cause movement of the piston, or by other adaptations of the sidearm reservoir as described hereinabove.

13

CLAIMS

1.      A method for monitoring changes in a physical
or chemical parameter, which comprises constructing
an optical fibre having a colour-sensitive portion
comprising a core which is free from cladding or whose
cladding is sufficiently thin or porous for a coloured
fluid to be capable of absorbing light which may
be passed through the sensitive portion  when the latter is immersed in the coloured fluid, immersing
at least a part of the sensitive portion in a colourant-
containing fluid, applying the parameter so as to vary
the spectrum or amount of colour adjacent to the sensitive
portion of the fibre with changes in the parameter,
passing through the sensitive portion light having a
wavelength or waveband which is absorbed at least in part
by the colourant in amount which varies with the changes
in parameter, and monitoring the absorption or changes in
the absorption of the light which passes through the
sensitive portion.

2.      A method as claimed in claim 1 wherein the
colourant-containing fluid is a liquid.

3.      A method as claimed in claim 1 or claim 2 which
comprises repeatedly analysing the spectrum of the light
which has passed through the sensitive portion of the
fibre thereby to determine the wavelength of a predetermined
absorption peak, and identifying variations in the wavelength at which the absorption peak occurs as an indication
of changes in the parameter.

4.      A method as claimed in claim 1 or claim 2 which
comprises monitoring variations in the absorption at a
predetermined wavelength as a measure of the changes in
the parameter.

5.      A method as claimed in claim 4 which comprises
measuring the intensity of the light which has passed
through the sensitive portion of the fibre, at a
wavelength at which light is absorbed by the colourant

14

and at a wavelength at which there is substantially no absorption, and determining the ratio of the intensities as a measure of the absorption due to the parameter-variable colour.

6.      A method as claimed in any one of claims 1, 2, 4 and 5, in which the parameter is applied to the fluid so as to vary the intensity of the colour in the fluid, thereby to vary the amount of colour adjacent to the sensitive fibre with changes in the parameter.

7.      A method as claimed in any one of claims 1, 2, 4, and 5 in which the colourant-containing fluid is a coloured liquid and the parameter is applied so as to vary the length of the sensitive portion which is immersed in the liquid, thereby to vary the amount of colour which is adjacent the sensitive portion with changes in the parameter.

8.      A method as claimed in claim 7 comprising locating the sensitive portion of the fibre along the inside of a hollow tube, connecting the tube to a reservoir containing the coloured liquid so that the liquid extends into the tube and thereby partly immerses the sensitive portion, and applying the parameter to the reservoir or extension thereof so as to vary the amount of the coloured liquid extending into the tube with changes in the parameter.

9.      A method as claimed in any one of the preceding claims in which the optical fibre has the configuration of a probe comprising a reflective colour-sensitive end, and a remote end connectable to both source and detector so that light fed into the remote end is transmitted to the sensitive end, and at least a portion is reflected back to the remote end for collection by the detector.

10.     A method as claimed in claim 9 in which the sensitive portion has two ends each of which leads into a different transmissive portion, the sensitive portion being in the form of two lengths lying adjacent to each other and joined by a reflective coupling means whereby light launched from a source into the remote end of one transmissive portion, travels through that portion, through one length of the sensitive portion to be reflected into the other length and thence along the other transmissive portion for detection at the latter's remote end.

Fig.1.

Fig.2.

2/4

0062443

**Fig.3.**

a. FIBRE IN WATER

Ia

WAVELENGTH (nm)

**Fig.4.**

b. FIBRE IN RHODAMINE B

Ib

WAVELENGTH (nm)

## Fig.5.

RATIO OF
INTENSITIES

$I_a/I_b$

1·0

0·6

400    600    800

WAVELENGTH (nm)

## Fig.6.

35

38

37

32

33

34

36

39

31

Fig. 7.

## DOCUMENTS CONSIDERED TO BE RELEVANT

| Category | Citation of document with indication, where appropriate, of relevant passages | Relevant to claim |
|---|---|---|
| Y | NATURE, Vol. 257, 23 October 1975 London E.E. HARDY et al. "Coated Optical Guides for Spectrophotometry of Chemical Reactions" pages 666, 667 * page 666, left-hand column, lines 14 to 33; page 666, right-hand column, lines 21 to 38; fig. 1, 2 * -- | 1,2, 4,6 |
| Y | ANALYTICAL CHEMISTRY, Vol. 51, No. 4 April 1979 Columbus, Ohio, USA P.L. SMOCK et al. "Vapor Phase Determination of Blood Ammonia by an Optical Waveguide Technique" pages 505 to 508 * page 505, left-hand column, first paragraph; page 505, right-hand column, line 17 to page 506, left-hand column, first paragraph; page 506, right-hand column, third paragraph to page 507, left-hand column, second paragraph; fig. 1 * -- | 1,4, 6,9 |
| Y | DE - A - 2 255 300 (SIEMENS AG) * claims 1, 2; page 1 to page 2, line 18; pages 6 to 8; fig. 1 * -- ./.. | 2-6, 10 |

**CLASSIFICATION OF THE APPLICATION (Int. Cl. 3)**

G 01 N 21/78

**TECHNICAL FIELDS SEARCHED (Int.Cl. 3)**

A 61 B 5/14
G 01 M 11/00
G 01 N 21/00
G 01 N 33/00
G 02 B 5/00

**CATEGORY OF CITED DOCUMENTS**

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

| | | | |
|---|---|---|---|
| X | The present search report has been drawn up for all claims | | |

| Place of search | Date of completion of the search | Examiner |
|---|---|---|
| Berlin | 27-05-1982 | HOFMANN |

EPO Form 1503.1 08.78

0062443
Application number
EP 82 30 1495.6
- page 2 -

European Patent
Office

**EUROPEAN SEARCH REPORT**

| | DOCUMENTS CONSIDERED TO BE RELEVANT | | CLASSIFICATION OF THE APPLICATION (Int. Cl.³) |
|---|---|---|---|
| Category | Citation of document with indication, where appropriate, of relevant passages | Relevant to claim | |
| Y | <u>DE - B - 1 498 513</u> (AMERICAN OPTICAL CO.)<br>* claims 1, 3; column 4, lines 33 to 62; column 5, lines 44 to 52; fig. 1, 7 *<br>& US - A - 3 068 742<br>-- | 2,4, 10 | |
| Y | <u>DE - A - 1 959 612</u> (EPPENDORF GERÄTEBAU NETHELER & HINZ GMBH)<br>* claims 1, 7, 14, 16, 24; fig. 1, 2, 4, 5 *<br>---- | 2,4, 10 | TECHNICAL FIELDS SEARCHED (Int. Cl.³) |